# EUROPEAN PATENT APPLICATION

(11) **EP 4 123 561 A1**
(43) Date of publication of application: **25.01.2023**
(21) Application number: 20925305.3
(22) Date of filing: 19.03.2020
(51) Int. Cl.: G06Q 50/10

(54) **VISIT PROMOTION DEVICE, SYSTEM, METHOD, AND NON-TRANSITORY COMPUTER-READABLE MEDIUM STORING PROGRAM THEREIN**

(71) Applicant: NEC Corporation, 108-8001 Tokyo (JP)
(72) Inventor: KAMEI, Akira, Tokyo 108-8001 (JP); YUKI, Honami, Tokyo 108-8001 (JP); TSUKAHARA, Keisuke, Tokyo 108-8001 (JP)
(74) Representative: Betten & Resch
(86) International application number: PCT/JP2020/012437
(87) International publication number: WO 2021/186708

(57) **Abstract**

Provided are visit promotion apparatuses for providing users who have actually visited various points with information in which visits to the respective points are recorded. A visit promotion apparatus (100) includes: an acquisition unit (130) configured to acquire captured images in which a user is photographed; an authentication control unit (140) configured to extract the user's face area or facial feature information from the captured images and cause an authentication apparatus (200) to perform face authentication; an image generation unit (170) configured to, when a prescribed image generation condition based on the face authentication at a plurality of points is satisfied, generate a composite image including the captured images at the respective points of the user who has succeeded in the face authentication; and an output unit (180) configured to transmit the composite image generated by the image generation unit (170) to a prescribed display terminal.

## Description

### [Technical Field]

The present invention relates to a visit promotion apparatus, system, and method, and a non-transitory computer-readable medium storing a visit promotion program, and more particularly, to a visit promotion apparatus, system and method, and a non-transitory computer-readable medium storing a visit promotion program, for promoting user's visits.

### [Background Art]

Patent Literature 1 discloses a technique that corroborates a visit at each point by performing face authentication with a camera installed at each point in a so-called stamp rally (point rally) in which a goal is achieved by visiting a plurality of points.

### [Citation List]

### [Patent Literature]

[Patent Literature 1]
Japanese Unexamined Patent Application Publication No. 2013-41416

### [Summary of Invention]

### [Technical Problem]

For a purpose of regional revitalization or the like, it is cited to utilize the stamp rally in order to promote purchase or the like of goods (payment) when each point in a region is actually visited. However, the technique disclosed in Patent Literature 1 is insufficient in utilization of the stamp rally.

The present disclosure has been made to solve such a problem, and an object is to provide a visit promotion apparatus, system, and method, and a non-transitory computer-readable medium storing a visit promotion program, for providing users who have actually visited various points with information in which visits to the respective points are recorded.

### [Solution to Problem]

A visit promotion apparatus according to the present disclosure comprises: an acquisition unit configured to acquire captured images in which a user is photographed; an authentication control unit configured to extract the user's face area or facial feature information from the captured images and cause an authentication apparatus to perform face authentication; an image generation unit configured to, when a prescribed image generation condition based on the face authentication at a plurality of points is satisfied, generate a composite image including the captured images at the respective points of the user who has succeeded in the face authentication; and an output unit configured to transmit the composite image generated by the image generation unit to a prescribed display terminal.

A visit promotion system according to the present disclosure comprises: a prescribed photographing device configured to take an image including a user's face area; a visit promotion apparatus configured to be able to communicate with the prescribed photographing device; and an authentication apparatus configured to store the user's facial feature information and be able to communicate with the visit promotion apparatus, wherein the visit promotion apparatus includes: an acquisition unit configured to acquire captured images of the user who has been photographed by the prescribed photographing device; an authentication control unit configured to extract the user's face area or facial feature information from the captured images and cause the authentication apparatus to perform face authentication; an image generation unit configured to, when a prescribed image generation condition based on the face authentication at a plurality of points is satisfied, generate a composite image including the captured images at the respective points of the user who has succeeded in the face authentication; and an output unit configured to transmit the composite image generated by the image generation unit to a prescribed display terminal.

A visit promotion method according to the present disclosure comprises the steps by a computer of: acquiring captured images in which a user is photographed; extracting the user's face area or facial feature information from the captured images and causing an authentication apparatus to perform face authentication; when a prescribed image generation condition based on the face authentication at a plurality of points is satisfied, generating a composite image including the captured images at the respective points of the user who has succeeded in the face authentication; and transmitting the generated composite image to a prescribed display terminal.

A non-transitory computer-readable medium according to the present disclosure records a program that causes to execute the steps of: acquiring captured images in which a user is photographed; extracting the user's face area or facial feature information from the captured images and causing an authentication apparatus to perform face authentication; when a prescribed image generation condition based on the face authentication at a plurality of points is satisfied, generating a composite image including the captured images at the respective points of the user who has succeeded in the face authentication; and transmitting the generated composite image to a prescribed display terminal.

A visit promotion apparatus according to the present disclosure comprises: an acquisition unit configured to acquire captured images in which a user is photographed; an extraction unit configured to extract a face area or facial feature information from the captured images; a face authentication unit configured to perform face authentication based on the face area or the facial feature information; an image generation unit configured to, when a prescribed image generation condition based on the face authentication at a plurality of points is satisfied, generate a composite image including the captured images at the respective points of the user who has succeeded in the face authentication; and an output unit configured to transmit the composite image generated by the image generation unit to a prescribed display terminal.

A visit promotion method according to the present disclosure comprises the steps by a computer of: acquiring captured images in which a user is photographed; extracting a face area or facial feature information from the captured images; performing face authentication based on the face area or the facial feature information; when a prescribed image generation condition based on the face authentication at a plurality of points is satisfied, generating a composite image including the captured images at the respective points of the user who has succeeded in the face authentication; and transmitting the generated composite image to a prescribed display terminal.

A non-transitory computer-readable medium according to the present disclosure records a program that causes to execute the steps of: acquiring captured images in which a user is photographed; extracting a face area or facial feature information from the captured images; performing face authentication based on the face area or the facial feature information; when a prescribed image generation condition based on the face authentication at a plurality of points is satisfied, generating a composite image including the captured images at the respective points of the user who has succeeded in the face authentication; and transmitting the generated composite image to a prescribed display terminal.

### [Advantageous Effects of Invention]

By the present disclosure, it is possible to provide the visit promotion apparatus, system, and method, and the non-transitory computer-readable medium storing the visit promotion program, for providing users who have actually visited various points with information in which visits to the respective points are recorded.

### [Brief Description of Drawings]

[Fig. 1] Fig. 1 is a block diagram showing a configuration of a visit promotion apparatus according to a first example embodiment.
[Fig. 2] Fig. 2 is a flowchart showing a flow of a visit promotion method according to the first example embodiment.
[Fig. 3] Fig. 3 is a block diagram showing a configuration of a visit promotion system according to a second example embodiment.
[Fig. 4] Fig. 4 is a block diagram showing a configuration of an authentication apparatus.
[Fig. 5] Fig. 5 is a block diagram showing a configuration of a face authentication terminal.
[Fig. 6] Fig. 6 is a block diagram showing a configuration of a user terminal.
[Fig. 7] Fig. 7 is a flowchart showing a flow of a facial feature information registration process.
[Fig. 8] Fig. 8 is a flowchart showing a flow of a face authentication process.
[Fig. 9] Fig. 9 is a flowchart showing a flow of an authentication recording process.
[Fig. 10] Fig. 10 is a flowchart showing a flow of a payment recording process.
[Fig. 11] Fig. 11 is a flowchart showing a flow of an image generation process.
[Fig. 12] Fig. 12 is an example of a composite image.
[Fig. 13] Fig. 13 is a sequence chart showing an operation example of the visit promotion system according to the second example embodiment.
[Fig. 14] Fig. 14 is a sequence chart showing an operation example of the visit promotion system according to the second example embodiment.
[Fig. 15] Fig. 15 is a sequence chart showing an operation example of the visit promotion system according to the second example embodiment.
[Fig. 16] Fig. 16 is a diagram exemplifying a map displayed on a display terminal.
[Fig. 17] Fig. 17 is a diagram exemplifying a payment history displayed on the display terminal.
[Fig. 18] Fig. 18 is a diagram exemplifying a visit promotion screen displayed on the display terminal.
[Fig. 19] Fig. 19 is a diagram exemplifying a visit promotion screen displayed on the display terminal.
[Fig. 20] Fig. 20 is a diagram exemplifying a visit promotion screen displayed on the display terminal.
[Fig. 21] Fig. 21 is a block diagram showing a configuration of a visit promotion apparatus according to a third example embodiment.
[Fig. 22] Fig. 22 is a block diagram showing a configuration of a visit promotion system according to the third example embodiment.

### [Description of Embodiments]

Hereinafter, example embodiments of the present disclosure will be described in detail with reference to the drawings. In the drawings, the same or corresponding elements will be denoted by the same reference signs, and duplicate description will be omitted depending on need for the sake of clarity of explanation.

### <First Example Embodiment>

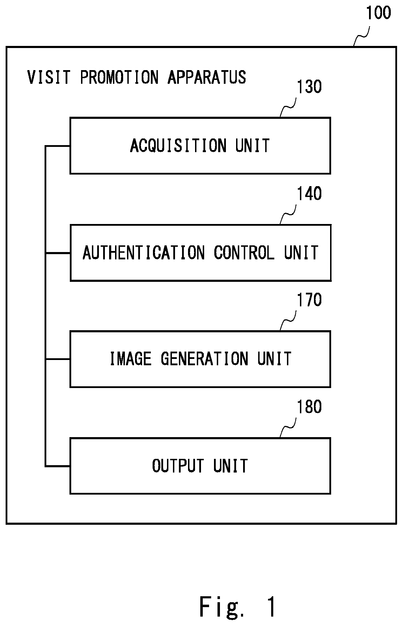

Fig. 1 is a block diagram showing a configuration of a visit promotion apparatus 100 according to a first example embodiment. The visit promotion apparatus 100 includes an acquisition unit 130, an authentication control unit 140, an image generation unit 170, and an output unit 180. The visit promotion apparatus 100 is connected to a network 500 (not shown). The network 500 may be wired or may be wireless. An authentication apparatus 200 and a face authentication terminal 300 that are not shown are connected to the network 500.

The acquisition unit 130 acquires captured images in which a user is photographed. The captured images are images including the user's face. The captured images are taken by a prescribed photographing device. The prescribed photographing device is, for example, a camera included in the face authentication terminal 300 and a camera of a user terminal such as a smartphone possessed by the user. The authentication control unit 140 extracts the user's face area or facial feature information from the captured images and causes the authentication apparatus 200 to perform face authentication. The authentication apparatus 200 stores in advance user ID and the user's facial feature information in association with each other.

When a prescribed image generation condition based on the face authentication at a plurality of points is satisfied, the image generation unit 170 generates a composite image including the captured images at the respective points of the user who has succeeded in the face authentication. The prescribed image generation condition is a condition for generating the composite image to be presented to the user. The prescribed image generation condition is, for example, having performed face authentication at a specific point, having performed face authentication at a prescribed number of points or more, or having made payment at any point. The output unit 180 transmits the composite image generated by the image generation unit 170 to a prescribed display terminal. The prescribed display terminal is, for example, the face authentication terminal 300, the user terminal, a store terminal, or a street signage. The user terminal is a communication terminal such as the smartphone possessed by the user. The store terminal is a terminal installed in each store, and, for example, displays "How about going to XX, next?" or the like when the user leaves the store.

The prescribed display terminal may be the prescribed photographing device described above or may be a different terminal. For example, when the captured images are taken by the user terminal, the output unit 180 may transmit the composite image to the user terminal, or may transmit the composite image to the face authentication terminal 300 or the like. When the captured images are taken by the face authentication terminal 300, the output unit 180 may transmit the composite image to the face authentication terminal 300, or may transmit the composite image to the user terminal or the like.

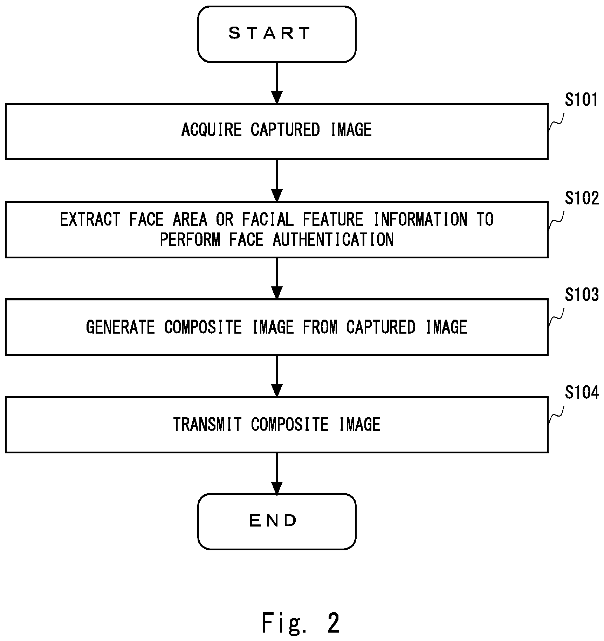

Fig. 2 is a flowchart showing a flow of a visit promotion method according to the first example embodiment. First, the acquisition unit 130 acquires captured images in which the user is photographed (step S101). Next, the authentication control unit 140 extracts the user's face area or facial feature information from the captured images acquired by the acquisition unit 130, and causes the authentication apparatus 200 to perform face authentication (step S102). The authentication apparatus 200 collates the face area or the facial feature information received from the authentication control unit 140 with the facial feature information registered in the authentication apparatus 200, determines success or failure of the authentication based on whether they match or not, and returns a determination result. Note that it is assumed that the authentication apparatus 200 has stored user ID and facial feature information in association with each other. When the face authentication is successful, the authentication apparatus 200 includes successful user ID in the determination result and returns the determination result.

Next, when the prescribed image generation condition based on the face authentication at the plurality of points is satisfied, the image generation unit 170 generates a composite image including the captured images of the respective points of the user who has succeeded in the face authentication (step S103). Next, the output unit 180 transmits the composite image generated by the image generation unit 170 to the prescribed display terminal (step S104). Like this, the visit promotion method according to the example embodiment can provide the user who has actually visited the points with information in which visits to the respective points are recorded.

The visit promotion apparatus 100 may include components such as a history storage unit, a point storage unit, an authentication recording unit, and a payment recording unit, in addition to the configuration shown in Fig. 1.

The history storage unit stores user ID, a passing point, a passing date and time, a captured image, and a payment history. The point storage unit stores point ID and access information on the point in association with each other. The authentication recording unit records, when the face authentication is successful, in the history storage unit, user ID of a user who has succeeded in the face authentication and a captured image in association with each other. The payment recording unit records, in the history storage unit, a payment history and user ID included in the payment history in association with each other.

The visit promotion apparatus 100 includes a processor, a memory, and a storage apparatus as unshown components. The storage apparatus has stored a computer program in which the processes of the visit promotion method according to the example embodiment is implemented. The processor loads the computer program from the storage apparatus into the memory, and executes the computer program. This allows the processor to implement the functions of the acquisition unit 130, authentication control unit 140, authentication recording unit, payment recording unit, image generation unit 170, and output unit 180.

Alternatively, the acquisition unit 130, authentication control unit 140, authentication recording unit, payment recording unit, image generation unit 170, and output unit 180 may each be made of dedicated hardware. Part or all of each component of each apparatus may be made up of general-purpose or dedicated circuitry, a processor, and the like, or a combination thereof. Those may be composed of a single chip or may be composed of a plurality of chips connected to each other via a bus. Part or all of each component of each apparatus may be made up of a combination of the above-described circuitry and the like and a program. As the processor, a CPU (Central Processing Unit), a GPU (Graphics Processing Unit), an FPGA (Field-Programmable Gate Array), or the like can be used.

When part or all of each component of the visit promotion apparatus 100 is made up of a plurality of information processing apparatuses, circuitry, and the like, the plurality of information processing apparatuses, the circuitry, and the like may be arranged in a centralized manner, or may be arranged in a distributed manner. For example, the information processing apparatuses, the circuitry, and the like may be constructed as a form in which those are connected with each other via a communication network, such as a client server system or a cloud computing system. In addition, functions of the visit promotion apparatus 100 may be provided in a SaaS (Software as a Service) form.

### <Second Example Embodiment>

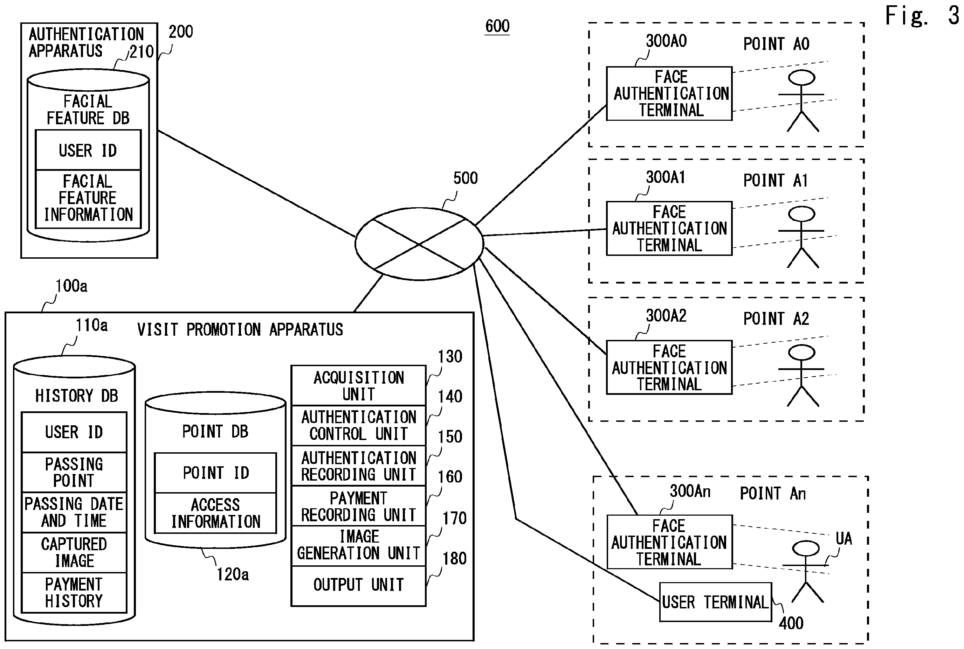

A second example embodiment is a specific example of the first example embodiment described above. Fig. 3 is a block diagram showing a configuration of a visit promotion system 600 according to the second example embodiment. The visit promotion system 600 includes at least a visit promotion apparatus 100a and an authentication apparatus 200, and further includes at least one of a face authentication terminal 300 and a user terminal 400. Each of the visit promotion apparatus 100a, authentication apparatus 200, face authentication terminal 300 (300A0, 300A1, 300A2, and 300An), and user terminal 400 is connected to each other via a network 500. Note that description that overlaps with the first example embodiment will be omitted as appropriate.

The visit promotion apparatus 100a includes a history DB (DataBase) 110a, a point DB 120a, an acquisition unit 130, an authentication control unit 140, an authentication recording unit 150, a payment recording unit 160, an image generation unit 170, and an output unit 180. The visit promotion apparatus 100a is an information processing apparatus that generates and presents a user's visit history, payment history, and composite image, and is, for example, a server apparatus developed from a computer.

The history DB 110a is a database for storing the user's passing point, captured image, and payment history. The history DB 110a is an example of a history storage unit. The history DB 110a has stored user ID, the user's passing point, a passing date and time at the passing point, a captured image at the passing point, and the user's payment history in association with each other. The user's passing point is, for example, an installation position of the face authentication terminal 300 by which the user has succeeded in the face authentication. The installation position of the face authentication terminal 300 is indicated by, for example, identification information on points A0, A1, A2, and An (where n is a natural number, and hereinafter, referred to as "points A0 to An"), that is, point ID. The passing date and time is a date and time when the user visited each point A0-An.

The points A0-An are, for example, checkpoints of a stamp rally by face authentication in an area A. By visiting each point A0-An and performing face authentication with the face authentication terminal 300 or user terminal 400, the user can record passing the check point in the visit promotion apparatus 100a. When the user registers face information at a start point (for example, the point A0) and succeeds in the face authentication at a goal point (for example, the point An), the user can obtain a composite image. If each point A0-An is a store, it is assumed that the user can make payment of product purchase or the like as well as the face authentication.

The visit date and time is, for example, a date and time when the user succeeded in the face authentication or a date and time when the user took a captured image. The captured image is an image taken at the time of face authentication, includes at least the user's face, and may further include a background of that point. The payment history is information including user ID of the user, point ID of the face authentication terminal, a payment date and time, payment information, and the like. The payment information is, for example, a purchased item and a purchase amount. The payment history registered with the history DB 110a may be face authentication payment or may be payment by other methods.

The point DB 120a is a database that manages the point ID of each point A0-An and access information in association with each other. The point DB 120a is an example of the point storage unit. The access information is link information to web information corresponding to, for example, each point A0-An, and specifically a URL (Uniform Resource Locator) or the like.

The acquisition unit 130 receives a face authentication request, a history registration request, and a composite image request from the face authentication terminal 300 or user terminal 400 via the network 500. In other words, the acquisition unit 130 acquires, from the face authentication terminal 300 or user terminal 400, a captured image by a camera 310 or 410, installation position information on the camera 310 or 410 (hereinafter, simply referred to as "installation position"), and the like.

The authentication control unit 140 extracts a face area or facial feature information from an image for authentication included in the face authentication request, transmits the face area or the facial feature information to the authentication apparatus 200 to cause it to perform face authentication. The authentication control unit 140 receives success or failure of the face authentication from the authentication apparatus 200, and returns the face authentication result to a request source terminal. When the face authentication is successful, the face authentication result includes the user ID.

When the face authentication is successful, the authentication recording unit 150 records, in the history DB 110a, the user ID of the user who has succeeded in the face authentication, the captured image, the passing point, and the passing date and time in association with each other. The captured image is, for example, the one that was used for the face authentication. Details will be described later, but when the face authentication is successful, the face authentication terminal 300 or user terminal 400 performs various processes such as a payment process. When the various processes such as the payment process are performed, the authentication recording unit 150 records, in the history DB 110a, the user ID of the user who has succeeded in the face authentication, the captured image, the passing point, and the passing date and time in association with each other. When receiving a payment history recording request, the payment recording unit 160 identifies user ID included in the payment history. The payment recording unit 160 then records, in the history DB 110a, the identified user ID and the payment history in association with each other.

When receiving the composite image request, the image generation unit 170 determines whether a prescribed image generation condition is satisfied or not. The image generation unit 170 determines based on results of the face authentication performed at the plurality of points whether the prescribed image generation condition is satisfied or not. The prescribed image generation condition includes, for example, that the face authentication is successful at two or more of the plurality of points and there is a payment history of the user at at least one of the two or more points. The prescribed image generation condition may be that the number of passing points is larger than a prescribed number N, or the like.

When the prescribed image generation condition is satisfied, the image generation unit 170 acquires a plurality of captured images associated with the user ID from the history DB 110a, and generates a composite image including the plurality of captured images. At this time, it is preferable that the image generation unit 170 identifies point ID corresponding to each captured image, acquires access information associated with the identified point ID from the point DB 120a, and sets the access information corresponding to an area of each captured image to generate the composite image. By incorporating the access information corresponding to the area of each captured image and generating the composite image, when clicking each captured image embedded in the acquired composite image, the user can access store information, event information, or the like related to the point. Therefore, it is possible to promote the user's revisit to each point.

The prescribed image generation condition may further include a payment history condition. The payment history condition is, for example, that there is a payment history at at least one of the passing points and that a payment amount of the payment history is equal to or more than a prescribed amount. In this case, the image generation unit 170 determines whether or not the payment history of the user who has succeeded in the face authentication satisfies the payment history condition.

The prescribed image generation condition may further include successful face authentication at a prescribed point. The successful face authentication at the prescribed point is, for example, that the face authentication is successful at a specific point such as a final point of the stamp rally. In this case, the image generation unit 170 acquires point ID in a captured image using which the face authentication is successful from the point DB 120a, and determines whether the acquired point ID is point ID of the prescribed point.

The output unit 180 transmits the composite image generated by the image generation unit 170, via the network 500, to a terminal that succeeded in the face authentication or a terminal which made the composite image request. The output unit 180 may transmit the composite image to a terminal other than the terminals that performed the face authentication or made the composite image request. For example, when the face authentication is performed from a store terminal, the output unit 180 may transmit the composite image to the store terminal, or may transmit the composite image to the user terminal owned by the user who has succeeded in the face authentication.

The authentication apparatus 200 is a apparatus that performs the user's face authentication. The authentication apparatus 200 includes a facial feature DB 210. The facial feature DB 210 is a facial feature database that stores user ID and the user's facial feature information in association with each other. The facial feature DB 210 is an example of a facial feature information storage unit. The face authentication terminal 300 is a terminal that takes an image used for face authentication. The face authentication terminal 300 is a terminal that transmits the captured image to the visit promotion apparatus 100a and makes a face authentication request. The face authentication terminal 300 is installed at each point A0-An within the area A. Specifically, the face authentication terminal 300A0 is installed at the point A0, the face authentication terminal 300A1 at the point A1, the face authentication terminal 300A2 at the point A2, and the face authentication terminal 300An at the point An. When visiting each point A0-An, the user directs the face toward a camera of the installed face authentication terminal 300A0-300An, takes an image, and makes product purchase or the like at the point.

The user terminal 400 is a terminal possessed by the user. The user terminal 400 is, for example, a communication terminal such as a smartphone, a tablet, or a PC. The user takes an image including the user's face using the face authentication terminal 300 or user terminal 400. The face authentication terminal 300 or user terminal 400 transmits the captured image to the visit promotion apparatus 100a.

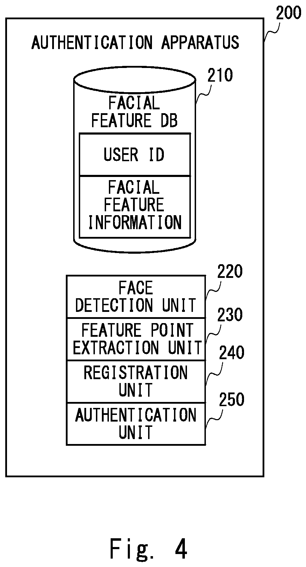

Next, a configuration of the authentication apparatus 200 will be described in detail with reference to Fig. 4. Fig. 4 is a block diagram showing the configuration of the authentication apparatus 200. The authentication apparatus 200 includes the facial feature DB 210, a face detection unit 220, a feature point extraction unit 230, a registration unit 240, and an authentication unit 250.

The facial feature DB 210 is a facial feature database that stores user ID and the user's facial feature information in association with each other. The face detection unit 220 detects a face area included in a captured image, and outputs it to the feature point extraction unit 230. The feature point extraction unit 230 extracts feature points from the face area detected by the face detection unit 220, and outputs facial feature information to the registration unit 240. The facial feature information is a set of the extracted feature points.

The registration unit 240 newly issues user ID when registering the facial feature information. The registration unit 240 registers, with the facial feature DB 210, the issued user ID and facial feature information extracted from a registered image in association with each other. The authentication unit 250 collates the facial feature information extracted from the face image with the facial feature information in the facial feature DB 210. The authentication unit 250 determines that the face authentication is successful if the facial feature information matches, and determines that the face authentication is failed if the facial feature information does not match. The authentication unit 250 returns the success or failure of the face authentication to the visit promotion apparatus 100a. Whether the facial feature information matches or not corresponds to the success or failure of the authentication. When the face authentication is successful, the authentication unit 250 identifies user ID associated with the successful facial feature information, and returns an authentication result including the identified user ID and the authentication success to the visit promotion apparatus 100a.

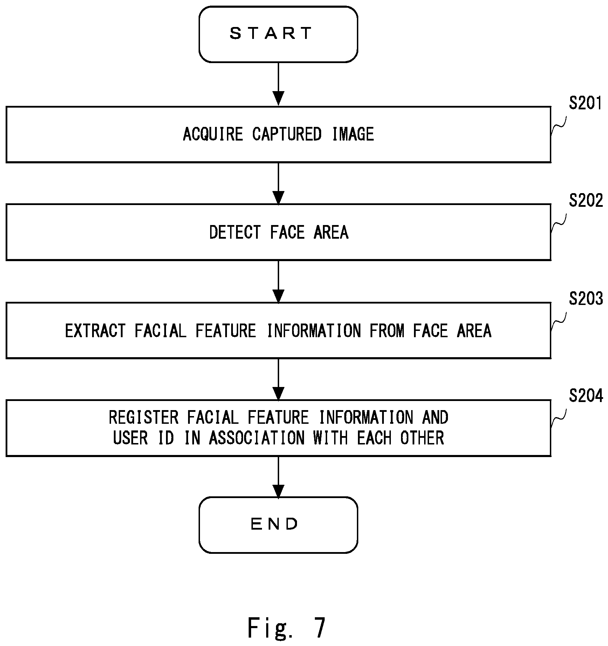

Operation of the authentication apparatus 200 when registering the user ID and the facial feature information with the facial feature DB 210 will be described with reference to Fig. 7. Fig. 7 is a flowchart showing a flow of a facial feature information registration process. Although Fig. 7 illustrates a case where the face authentication terminal 300 takes an image and registers facial feature information, also when the user terminal 400 takes an image, the facial feature information can be registered in a similar procedure.

When registering the facial feature information, the face authentication terminal 300 takes an image including the user's face as an image for registration, and makes a facial feature information registration request to the authentication apparatus 200 via the network 500. The facial feature information registration request includes the image for registration. First, the authentication apparatus 200 acquires the image for registration from the face authentication terminal 300 or user terminal 400 via the network 500 (step S201).

Next, the face detection unit 220 detects a face area included in the image for registration (step S202), and outputs the detected face area to the feature point extraction unit 230. Then, the feature point extraction unit 230 extracts feature points from the face area, and outputs facial feature information to the registration unit 240 (step S203). The registration unit 240 then issues user ID corresponding to the output facial feature information, and registers, with the facial feature DB 210, the user ID and the facial feature information in association with each other (step S204).

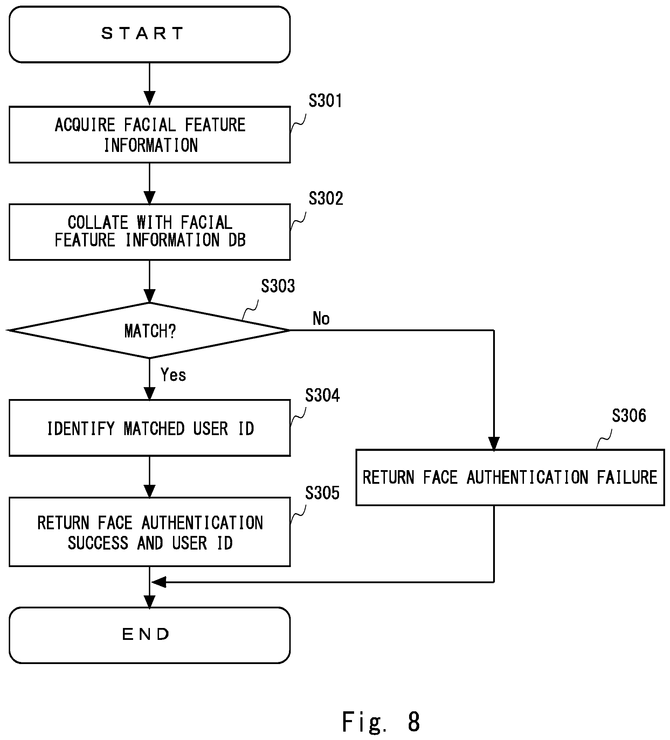

Operation of the authentication apparatus 200 when performing face authentication will be described with reference to Fig. 8. Fig. 8 is a flowchart showing a flow of a face authentication process. Although Fig. 8 illustrates a case where the face authentication terminal 300 makes a face authentication request, also when the user terminal 400 makes a face authentication request, the face authentication can be performed in a similar procedure.

When performing face authentication, the face authentication terminal 300 takes an image including the user's face as an image for authentication, and makes a face authentication request to the visit promotion apparatus 100a via the network 500. The face authentication request includes the image for authentication. First, the visit promotion apparatus 100a transmits a face area or facial feature information extracted from the image for authentication to the authentication apparatus 200. By extracting facial feature information from the received face area or receiving the facial feature information, the feature point extraction unit 230 acquires the facial feature information (step S301).

Next, the authentication unit 250 collates the facial feature information acquired by the acquisition unit 130 with the facial feature DB 210 (step S302). If the facial feature information matches (step S303 Yes), the authentication unit 250 identifies user ID of the user whose facial feature information matches (step S304), and returns face authentication success and the identified user ID to the visit promotion apparatus 100a (step S305). If there is no matching facial feature information (step S303 No), the authentication unit 250 returns face authentication failure to the visit promotion apparatus 100a (step S306).

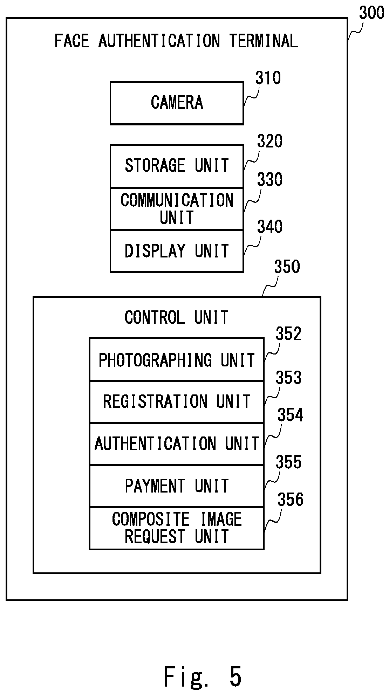

Next, a configuration of the face authentication terminal 300 will be described in detail with reference to Fig. 5. The face authentication terminal 300 includes, as a hardware configuration, a photographing device such as a camera, a display device, and a computer. The face authentication terminal 300 is a device that makes a facial feature information registration request and a face authentication request. The face authentication terminal 300 may be, for example, a terminal that makes payment by face authentication, a terminal that controls admission by face authentication, and a digital signage that presents information according to face authentication, but is not limited thereto.

Fig. 5 is a block diagram showing a configuration of the face authentication terminal 300. The face authentication terminal 300 includes the camera 310, a storage unit 320, a communication unit 330, a display unit 340, and a control unit 350. The camera 310 is a photographing device that takes an image. The storage unit 320 is a storage apparatus that stores a program for implementing functions of the face authentication terminal 300. The communication unit 330 is a communication interface with the network 500. The display unit 340 is a display device that displays the face authentication result, the composite image, and the like to the user. The control unit 350 controls the hardware included in the face authentication terminal 300. The control unit 350 includes a photographing unit 352, a registration unit 353, an authentication unit 354, a payment unit 355, and a composite image request unit 356.

The photographing unit 352 makes a photographing request to the camera 310. The camera 310 takes images including the user's face. The images taken by the camera 310 are used as an image for registration and an image for authentication. The registration unit 353 transmits the facial feature information registration request to the authentication apparatus 200 via the network 500. The facial feature information registration request includes the image for registration taken by the camera 310. The authentication unit 354 transmits the face authentication request to the visit promotion apparatus 100a via the network 500. The face authentication request includes the image for authentication taken by the camera 310. The authentication unit 354 receives success or failure of the face authentication from the visit promotion apparatus 100a, and causes the display unit 340 to display the result.

The payment unit 355 performs the payment process when the face authentication is successful. The control unit 350 may include a recording unit (not shown) instead of the payment unit 355. The recording unit records the user's entering and exiting from a facility where the face authentication terminal 300 is installed when the face authentication is successful. The composite image request unit 356 transmits the composite image request to the visit promotion apparatus 100a via the network 500. The composite image request includes a payment history, which is a result of the payment process. The payment history is, for example, information including a date and time of payment, an amount of money, goods, user ID, and the like.

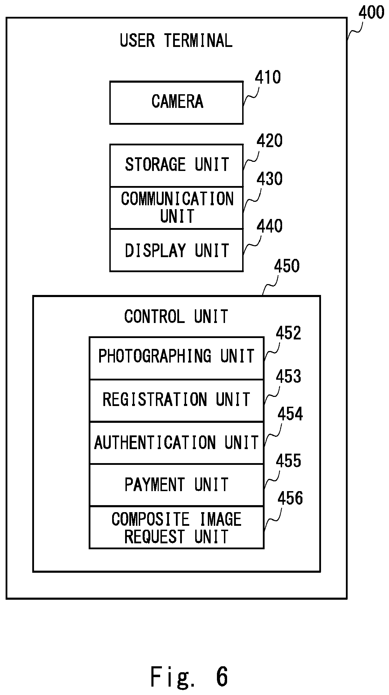

Next, a configuration of the user terminal 400 will be described in detail with reference to Fig. 6. Fig. 6 is a block diagram showing the configuration of the user terminal 400. The user terminal 400 includes the camera 410, a storage unit 420, a communication unit 430, a display unit 440, and a control unit 450. The control unit 450 includes a photographing unit 452, a registration unit 453, an authentication unit 454, a payment unit 455, and a composite image request unit 456. Since functions of each component included in the user terminal 400 are the same as those of each component included in the face authentication terminal 300, description will be omitted.

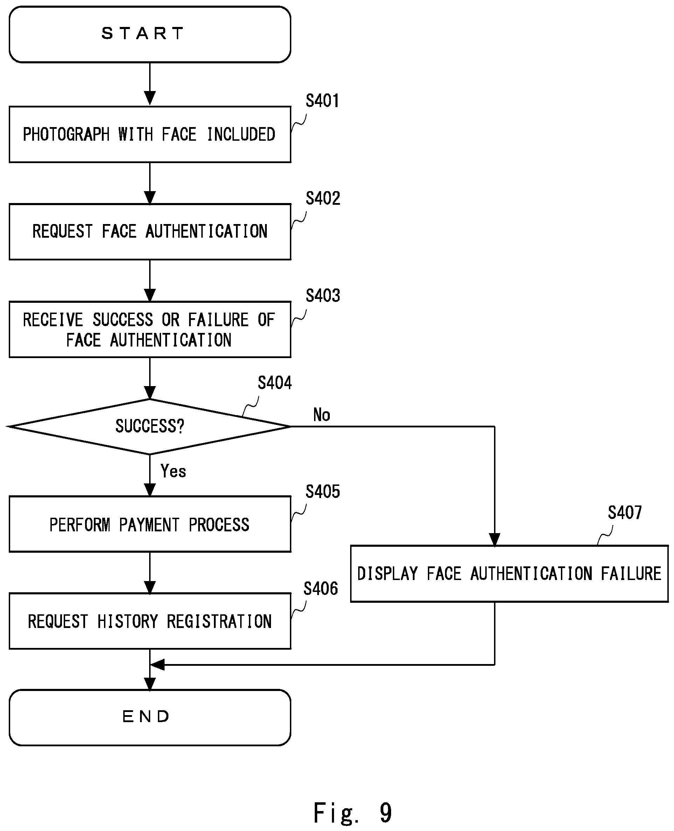

The face authentication terminal 300 and user terminal 400 performs the payment process when the face authentication is successful, and make a history registration request to cause the visit promotion apparatus 100a to register the history. Hereinafter, operation of the face authentication terminal 300 when making the history registration request will be described with reference to Fig. 9. Fig. 9 is a flowchart showing a flow of a history registration process. Although Fig. 9 illustrates a case where the face authentication terminal 300 makes the history registration request, the user terminal 400 can also make the history registration request in a similar procedure.

First, the photographing unit 352 makes a photographing request to the camera 310, and the camera 310 takes an image for authentication including the user's face (step S401). Next, the authentication unit 354 transmits the face authentication request to the authentication apparatus 200 via the network 500 (step S402) and receives its success or failure from the authentication apparatus 200 (step S403). If the face authentication is successful (step S404 Yes), the payment unit 355 performs the payment process (step S405), and makes a history registration request to the visit promotion apparatus 100a via the network 500 (step S406). If the face authentication is failed (step S405 No), the payment unit 355 causes the display unit 340 to display face authentication failure.

Fig. 9 illustrates the case where the payment process is performed when the face authentication is successful, but the face authentication terminal 300 or user terminal 400 causes the visit promotion apparatus 100a to register the history in a similar procedure when also performing various processes other than the payment process. As the various processes other than the payment process, for example, a commemorative photographing of the user who is successful in the face authentication can be considered.

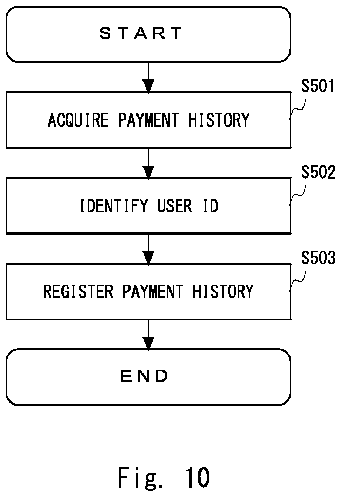

Fig. 10 is a flowchart showing a flow of a payment recording process. The history registration request transmitted in step S406 described above includes the payment history. The payment history includes the user ID of the user who has succeeded in the face authentication, the point ID of the face authentication terminal 300, the payment date and time, the payment information, and the like. When receiving the history registration request, the visit promotion apparatus 100a acquires the payment history included in the history registration request (step S501), and identifies the user ID included in the payment history (step S502). Next, the visit promotion apparatus 100a registers, with the history DB 110a, the identified user ID and the payment history in association with each other (step S503). When the various processes other than the payment process are performed, the history is registered in a similar procedure.

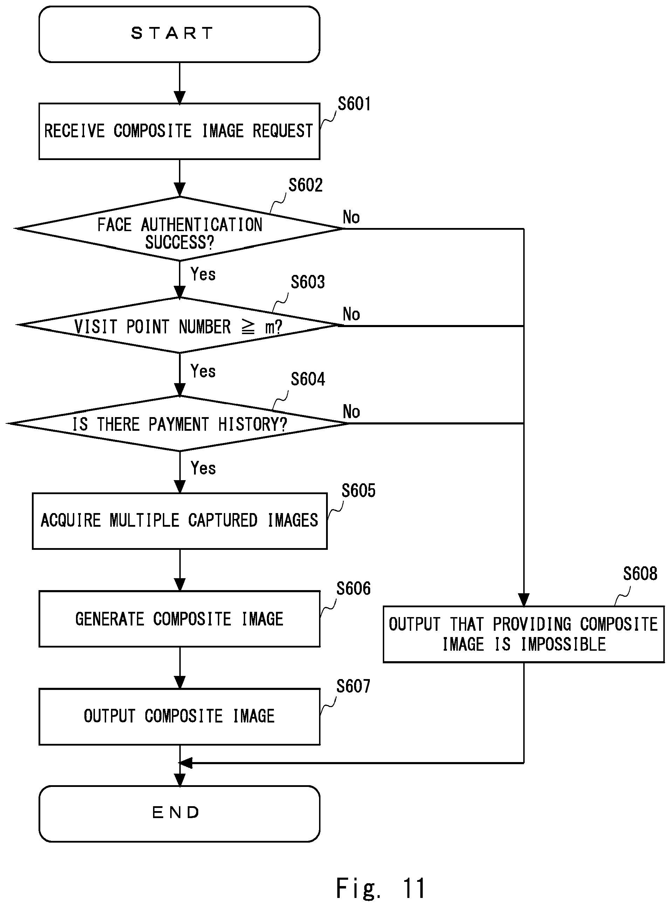

The visit promotion apparatus 100a generates a composite image when the face authentication is successful, or a composite image request is received. The visit promotion apparatus 100a generates the composite image, for example, when the user has succeeded in the face authentication at all the points A0-An within the area A. The user may arbitrarily specify timing at which the composite image request is made. Hereinafter, operation of the visit promotion apparatus 100a when generating a composite image in response to the composite image request will be described with reference to Fig. 11. Fig. 11 is a flowchart showing a flow of an image generation process.

In an example shown in Fig. 11, it is assumed that the prescribed image generation condition is that the face authentication is successful at m or more points including a specific point and there is a payment history at at least one of the points where the face authentication is successful (where, m is an integer of two or more and n or less). First, when the acquisition unit 130 receives the composite image request (step S601), the image generation unit 170 determines whether the face authentication is successful at the specific point (step S602). Specifically, the image generation unit 170 reads out passing points associated with the user ID included in the composite image request from the history DB 110a, and determines whether the read-out passing points include the specific point. Since the passing points registered with the history DB 110a are points where the face authentication is successful, if the passing points include the specific point, it can be said that the face authentication is successful at the specific point. If the face authentication is not successful at the specific point (step S602 No), the image generation unit 170 outputs that the composite image cannot be provided (step S608).

If the face authentication is successful at the specific point (step S602 Yes), the image generation unit 170 determines whether the number of visit points of the user is m or more (step S603). If the number of visit points is less than m (step S603 No), the image generation unit 170 outputs that the composite image cannot be provided (step S608). If the number of visit points is equal to or more than m (step S603 Yes), the image generation unit 170 determines whether there is a payment history at any of the points where the face authentication is successful (step S604). If there is no payment history at any of the points where the face authentication is successful (step S604 No), the image generation unit 170 outputs that the composite image cannot be provided (step S608).

If there is a payment history at any of the points where the face authentication is successful (step S604 Yes), the image generation unit 170 acquires a plurality of captured images associated with the user ID from the history DB 110a (step S605). The image generation unit 170 then generates a composite image including the plurality of acquired captured images (step S606), and outputs the composite image to the prescribed display terminal (step S607). The prescribed display terminal receives the composite image via the network 500 and displays it on a screen.

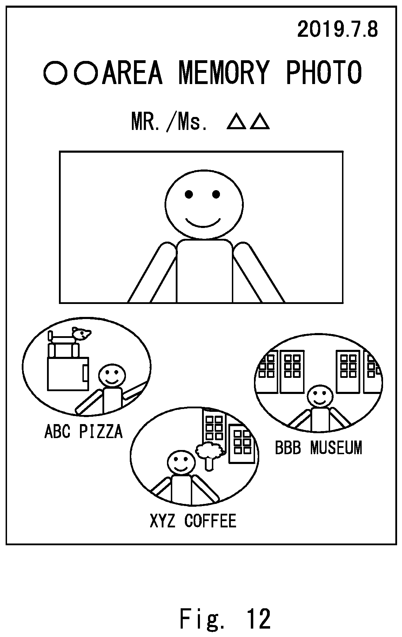

Fig. 12 is an example of the composite image. As shown in Fig. 2, images taken by the user at respective points are embedded in the composite image. Originality of the composite image can be increased by embedding the images in which the user is photographed. The composite image may include the date, the user's name, names of the respective points, or the like.

Links for accessing detailed information on the respective points may be attached to the images included in the composite image and the names or the like of the respective points. As the detailed information on each point, for example, a type of store and a map can be cited. When the user clicks a link, for example, the detailed information on the point and payment information at the point are displayed. When the user clicks a link, a screen for posting to SNS (Social Networking Service) or the like may be displayed. When the user posts from the screen for posting, recommendation information presented to other users may be supported based on the posting.

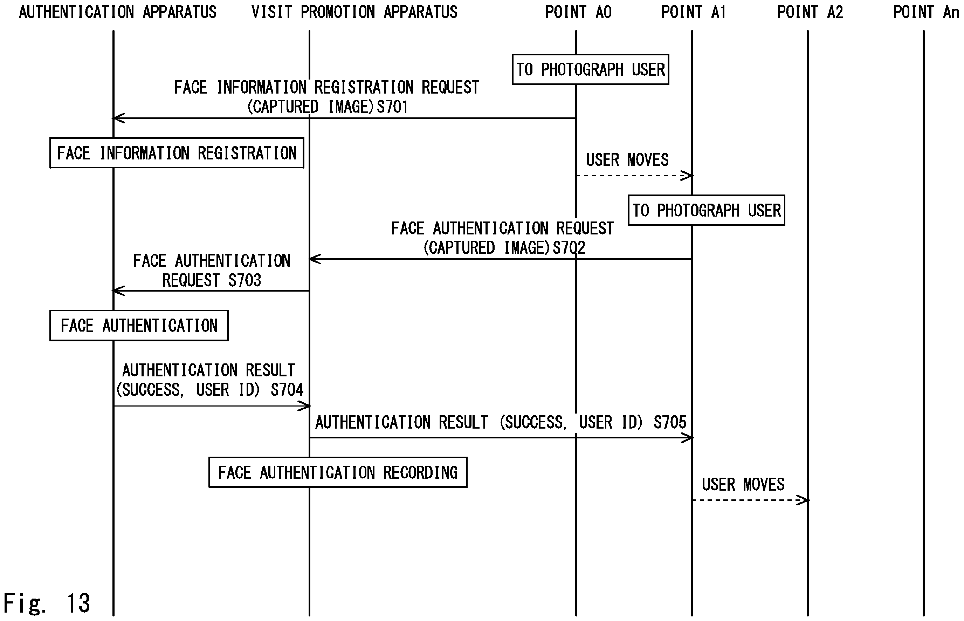

Next, operation of the visit promotion system 600 when the user visits the points A0, A1, A2, and An in this order and makes payment at the point A2 will be described with reference to Figs. 13-15. Figs. 13-15 are sequence charts showing operation examples of the visit promotion system according to the second example embodiment.

As shown in Fig. 13, the user first takes a captured image by the face authentication terminal 300A0 or user terminal 400. The terminal that took the image transmits a facial information registration request to the authentication apparatus 200 via the network 500 (step S701). The facial information registration request is a registration request for the user's facial feature information. The facial information registration request includes the captured image. When receiving the facial information registration request, the authentication apparatus 200 issues new user ID, and registers, with the facial feature DB 210, the user ID and facial feature information extracted from the captured image in association with each other.

Next, the user moves to the point A1 and takes a captured image by the face authentication terminal 300A1 or user terminal 400. The terminal that took the image transmits a face authentication request to the visit promotion apparatus 100a via the network 500 (step S702). When receiving the face authentication request, the visit promotion apparatus 100a extracts a face area or facial feature information from the captured image included in the face authentication request, and transmits it to the authentication apparatus 200 (step S703). When receiving the face area, the authentication apparatus 200 extracts facial feature information from the face area and collates the extracted facial feature information with the facial feature information registered with the facial feature DB 210 to perform face authentication. When receiving the facial feature information, the authentication apparatus 200 collates the received facial feature information with the facial feature information registered with the facial feature DB 210 to perform face authentication.

Next, the authentication apparatus 200 transmits a face authentication result to the visit promotion apparatus 100a (step S704). When the face authentication is successful, the face authentication result includes face authentication success and user ID of the user who has succeeded in the face authentication. The visit promotion apparatus 100a transmits the received face authentication result to the face authentication terminal 300A1 or user terminal 400 (step S705). The visit promotion apparatus 100a registers, with the history DB 110a, the captured image received in step S702 and the user ID included in the face authentication result received in step S704 in association with each other. Next, the user moves to the point A2.

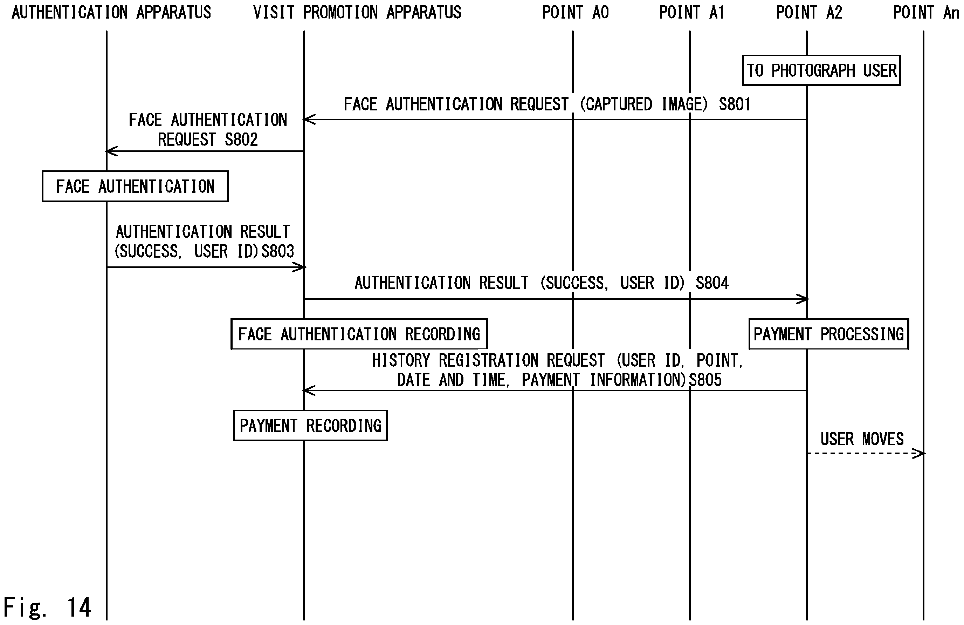

Next, as shown in Fig. 14, the user takes a captured image by the face authentication terminal 300A2 or user terminal 400. The terminal that took the image transmits a face authentication request to the authentication apparatus 200 via the network 500 (step S801). When receiving the face authentication request, the visit promotion apparatus 100a extracts a face area or facial feature information from the captured image included in the face authentication request and transmits it to the authentication apparatus 200 (step S802). The authentication apparatus 200 performs face authentication based on the received face area or facial feature information, and transmits the face authentication result to the visit promotion apparatus 100a (step S803).

The visit promotion apparatus 100a transmits the received face authentication result to the face authentication terminal 300A2 or user terminal 400 (step S804). The visit promotion apparatus 100a records, in the history DB 110a, the captured image received in step S801 and the user ID included in the face authentication result received in step S803 in association with each other. Next, the user performs the payment process on the face authentication terminal 300A2 or user terminal 400. The terminal that performed the payment process transmits a history registration request to the visit promotion apparatus 100a via the network 500 (step S805). The history registration request includes the user ID of the user who has succeeded in the face authentication, the point ID of the face authentication terminal 300, and the payment history such as the payment date and time and the payment information. When receiving the history registration request, the visit promotion apparatus 100a records, in the history DB 110a, the user ID included in the history registration request and the payment history in association with each other. The user then moves to the point An.

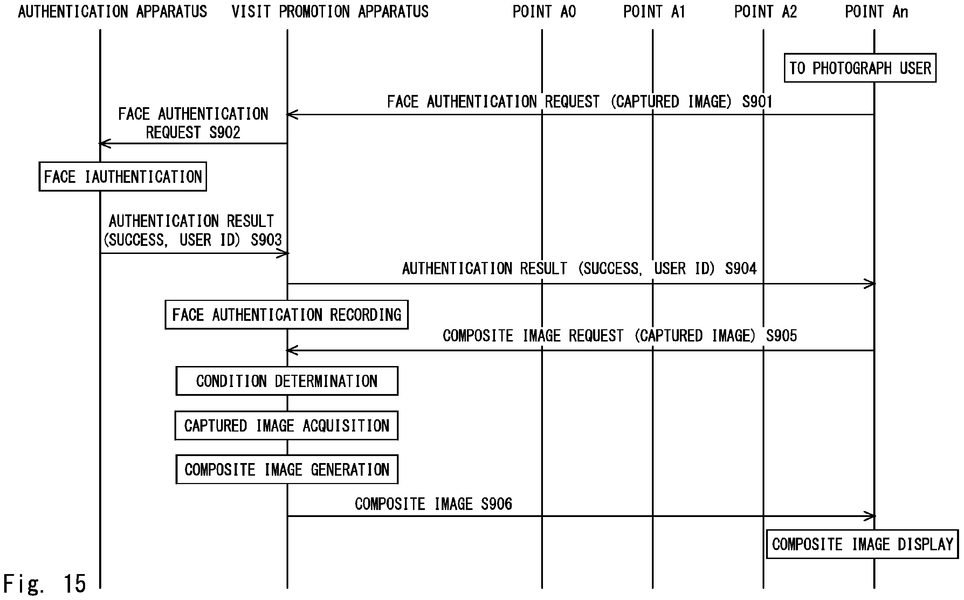

Next, as shown in Fig. 15, the user takes a captured image by the face authentication terminal 300An or user terminal 400. The terminal that took the image transmits a face authentication request to the authentication apparatus 200 via the network 500 (step S901). When receiving the face authentication request, the visit promotion apparatus 100a extracts a face area or facial feature information from the captured image included in the face authentication request and transmits it to the authentication apparatus 200 (step S902). The authentication apparatus 200 performs face authentication based on the received face area or facial feature information, and transmits the face authentication result to the visit promotion apparatus 100a (step S903).

The visit promotion apparatus 100a transmits the received face authentication result to the face authentication terminal 300An or user terminal 400 (step S904). The visit promotion apparatus 100a records, in the history DB 110a, the captured image received in step S901 and the user ID included in the face authentication result received in step S903 in association with each other. Next, the face authentication terminal 300An or user terminal 400 transmits a composite image request to the visit promotion apparatus 100a via the network 500 by the user's designation (step S905). The composite image request includes the user ID. Note that the face authentication terminal 300An or user terminal 400 may transmit the composite image request to the visit promotion apparatus 100a without the user's designation if the prescribed image generation condition is satisfied.

When receiving the composite image request, the visit promotion apparatus 100a acquires passing points, a payment history, and the like associated with the user ID included in the composite image request from the history DB 110a and determines whether the prescribed image generation condition is satisfied. If the prescribed image generation condition is satisfied, the visit promotion apparatus 100a acquires a plurality of captured images associated with the user ID from the history DB 110a, and generates a composite image. The visit promotion apparatus 100a then transmits the generated composite image to the face authentication terminal 300An or user terminal 400 (step S906). The terminal that received the composite image displays the composite image on the screen.

If the user's passing points, payment history, or the like do not satisfy the prescribed image generation condition, the output unit 180 may transmit information (for example, visit promotion information described later) indicating a condition necessary for satisfying the prescribed image generation condition to the face authentication terminal 300An or user terminal 400.

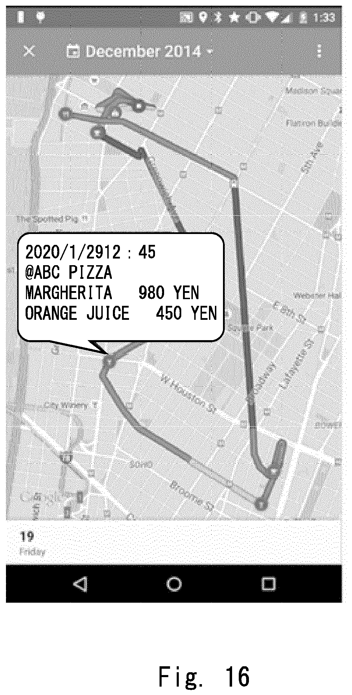

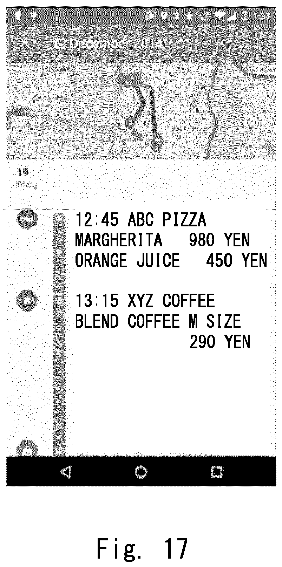

Fig. 16 is a diagram exemplifying a map displayed on the display terminal. Fig. 16 illustrates a case where a payment history is displayed on the user terminal 400. As shown in Fig. 16, the user terminal 400 may display the user's passing points and payment history on the map. Fig. 17 is a diagram exemplifying a payment history displayed on the display terminal. As shown in Fig. 17, the user terminal 400 may display the user's payment history in chronological order.

Although Figs. 16 and 17 show a case where only the user's payment history is displayed on the display terminal, visit promotion information in addition to the payment history may be displayed on the display terminal. The visit promotion information is information about a visit promotion point. The visit promotion point is, for example, a point which the user has not visited yet and needs to visit in order to satisfy the prescribed image generation condition. The visit promotion point may be a point which the user has visited already and has not made payment equal to or more than a predetermined amount.

Information on the visit promotion point may include route guidance or the like from the user's current position to the visit promotion point. The route guidance may include distance, required time, or the like from the user's current position to the visit promotion point. Multiple pieces of visit promotion information may be displayed on the display terminal. When the multiple pieces of visit promotion information are displayed, details, route guidance, and the like of the pieces of visit promotion information may be simultaneously displayed. The user can study the details, the route guidance, and the like of each piece of visit promotion information and compare the pieces of visit promotion information with each other.

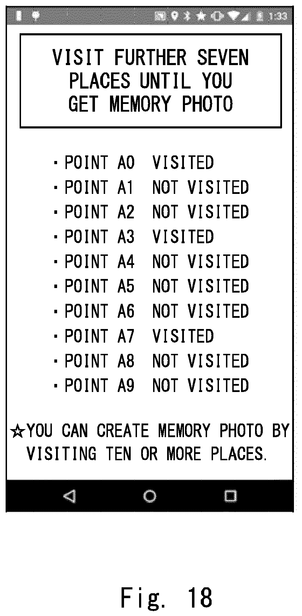

Figs. 18-20 are diagrams exemplifying a visit promotion screen displayed on the display terminal. On the visit promotion screen, at least the visit promotion information is displayed, and the user's visit points, payment history, or the like may be further displayed. On the visit promotion screen shown in Figs. 18-20, links for accessing detailed information on the respective points may be attached. When the user clicks a link to a point, the detailed information on the point may be displayed on the visit promotion screen.

Fig. 18 shows an example of the visit promotion screen of a case where the prescribed image generation condition is to visit all of the ten points A0-A9. As shown in Fig. 18, the visit promotion screen displays, for example, which points the user has visited already at the current time point. In addition, the visit promotion screen may display which points should be visited to satisfy the prescribed image generation condition, and the number of points or the like necessary to be visited to satisfy the prescribed image generation condition. Specifically, as shown in Fig. 18, the number of points necessary to be visited in order to satisfy the prescribed image generation condition is ten, and the user has visited three points at the current time point. In this case, that the composite image can be acquired if further seven points are visited may be displayed.

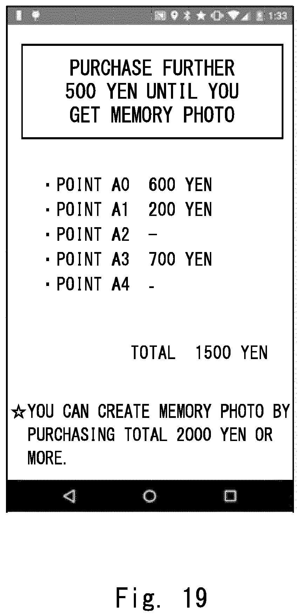

Fig. 19 shows an example of the visit promotion screen of a case where the prescribed image generation condition is that the total amount of payment at the five points A0-A4 is 2000 yen or more. As shown in Fig. 19, the visit promotion screen displays, for example, amounts of payment made at the points A0-A4 by the user. The visit promotion screen may display a purchase amount or the like necessary for satisfying the prescribed image generation condition. Specifically, as shown in Fig. 19, when the total purchase amount necessary for satisfying the prescribed image generation condition is 2000 yen and the total purchase amount at the current time point is 1500 yen, that the composite image can be acquired if further 500 yen is purchased may be displayed.

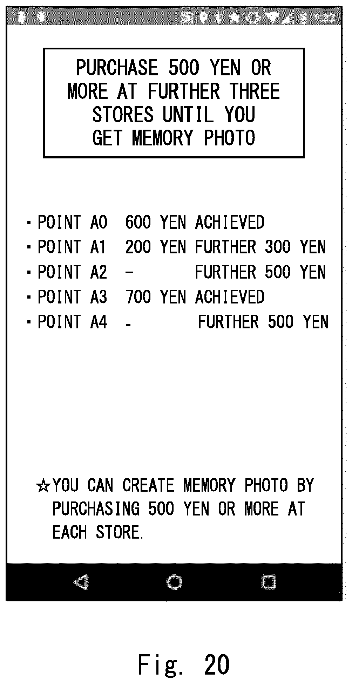

Fig. 20 shows an example of the visit promotion screen of a case where the prescribed image generation condition is to make payment of 500 yen or more at each of the points A0-A4. As shown in Fig. 20, the visit promotion screen displays, for example, amounts of payment made at the respective points A0-A4 by the user. The visit promotion screen may display purchase amounts at the respective points A0-A4 necessary for satisfying the prescribed image generation condition and the number of points necessary to be visited or the like for satisfying the prescribed image generation condition. Specifically, as shown in Fig. 20, it is assumed that the purchase amount necessary for satisfying the prescribed image generation condition is 500 yen or more at each of the points, the purchase amounts at two points at the current time point are each 500 yen or more, and the purchase amount at one point is 200 yen. In this case, that the composite image can be acquired if further two points are visited and 500 yen or more is purchased at each point and further 300 yen is purchased at the point where 200 yen has been already purchased, may be displayed.

### <Third Example Embodiment>

A third example embodiment is a modification of the first and second example embodiments described above. The visit promotion apparatuses 100, 100a, and 700 according to the first and second example embodiments use the external authentication apparatus 200 to perform face authentication. On the other hand, a visit promotion apparatus 800 according to the present example embodiment performs face authentication inside the apparatus.

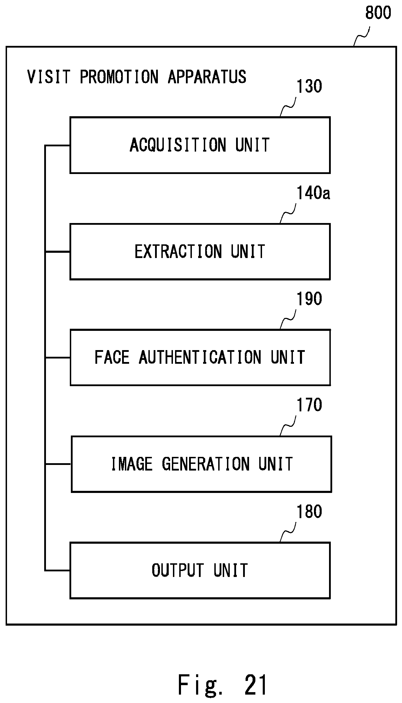

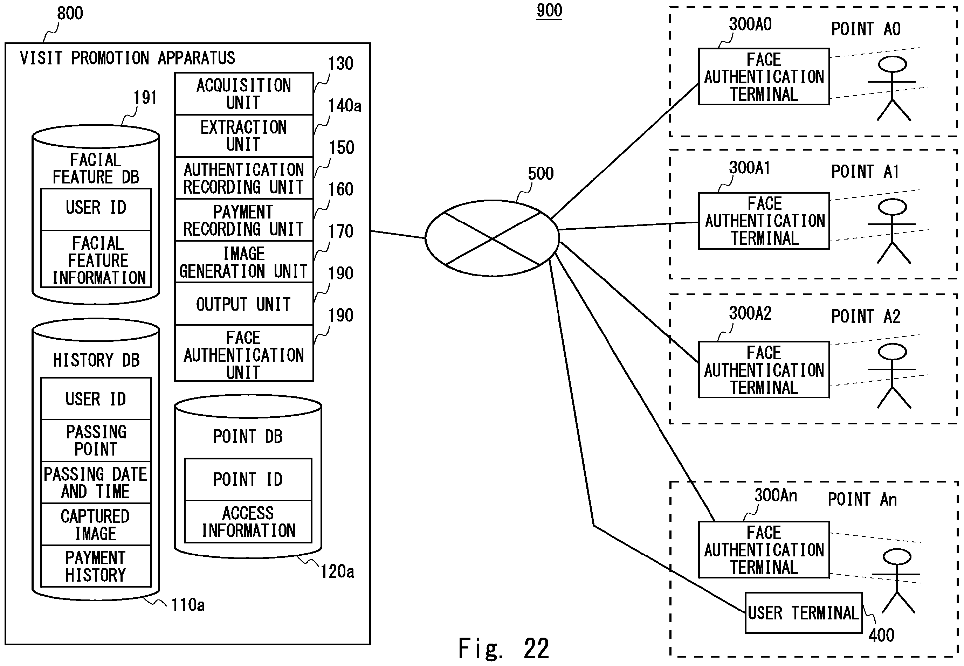

Fig. 21 is a block diagram showing a configuration of the visit promotion apparatus 800 according to the third example embodiment. In the visit promotion apparatus 800, compared with the configuration of the visit promotion apparatus 100 shown in Fig. 1, the authentication control unit 140 is replaced with a facial feature extraction unit 140a and a face authentication unit 190, and a facial feature DB 191 (not shown) is added. The facial feature DB 191 is an example of the facial feature information storage unit. Regarding each component included in the visit promotion apparatus 800, description that overlaps with the second example embodiment will be omitted as appropriate. Fig. 22 is a block diagram showing a configuration of a visit promotion system 900 according to the third example embodiment. The visit promotion system 900 is different from the visit promotion system 600 in that it does not include the authentication apparatus 200 and includes the visit promotion apparatus 800. Since other part of the configuration is the same, description will be omitted as appropriate.

The facial feature extraction unit 140a extracts a face area or facial feature information from a captured image. The face authentication unit 190 performs face authentication based on the extracted face area or facial feature information. The facial feature DB 191 is a facial feature database that stores user ID and the facial feature information on the user in association with each other. The visit promotion apparatus 800 generates a composite image according to the flow shown in Fig. 2, similarly to the visit promotion apparatus 100. However, in step S103, the facial feature extraction unit 140a extracts a face area or facial feature information from a captured image acquired by an acquisition unit 130, and the face authentication unit 190 performs face authentication based on the extracted face area or facial feature information. In addition, the visit promotion apparatus according to the present example embodiment can exhibit the same effects as described in the first to third example embodiments.

The above-described example embodiments are described as a hardware configuration, but not limited thereto. The present disclosure can be realized also by causing a CPU to execute computer programs for arbitrary processes.

In the above-described examples, the programs can be stored using various types of non-transitory computer-readable media, and supplied to the computers. The non-transitory computer-readable media include various types of tangible storage media. Examples of the non-transitory computer-readable media include magnetic recording media (for example, flexible disks, magnetic tapes, and hard disk drives), magneto-optical recording media (for example, magneto-optical disks), CD-ROM (Read Only Memory), CD-R, CD-R/W, DVD (Digital Versatile Disc), semiconductor memory (for example, mask ROM, PROM (Programmable ROM), EPROM (Erasable PROM), flash ROM, and RAM (Random Access Memory)). The programs may be supplied to the computers by various types of transitory computer-readable media. Examples of the transitory computer-readable media include electric signals, optical signals, and electromagnetic waves. The transitory computer-readable media can supply the programs to the computers via wired communication paths such as wires and optical fibers or wireless communication paths.

The present disclosure is not limited to the above example embodiments and can be modified as appropriate in a range without departing from the spirit. The present disclosure may be carried out by appropriately combining the respective example embodiments.

Some or all of the above example embodiments can also be described as in the following supplementary note, but not limited thereto.

### (Supplementary note A1)

A visit promotion apparatus comprising:
acquisition means for acquiring captured images in which a user is photographed;
authentication control means for extracting the user's face area or facial feature information from the captured images and causing an authentication apparatus to perform face authentication;
image generation means for, when a prescribed image generation condition based on the face authentication at a plurality of points is satisfied, generating a composite image including the captured images at the respective points of the user who has succeeded in the face authentication; and
output means for transmitting the composite image generated by the image generation means to a prescribed display terminal.

### (Supplementary note A2)

The visit promotion apparatus according to Supplementary note A1, wherein the prescribed image generation condition includes a case where the face authentication is successful at two or more of the plurality of points and there is a payment history of the user at at least one of the two or more points.

### (Supplementary note A3)

The visit promotion apparatus according to Supplementary note A1 or A2, wherein when the prescribed image generation condition is not satisfied at points where the face authentication is successful, the output means transmits information indicating a condition necessary for satisfying the image generation condition to the display terminal.

### (Supplementary note A4)

The visit promotion apparatus according to any one of Supplementary notes A1 to A3, further comprising authentication recording means for, when the face authentication is successful, recording, in history storage means, user ID of the user who has succeeded in the face authentication and the captured images in association with each other,
wherein the image generation means acquires the captured images associated with the user ID of the user who has succeeded in the face authentication from the history storage means and uses the captured images to generate a composite image.

### (Supplementary note A5)

The visit promotion apparatus according to Supplementary note A4, further comprising payment recording means for recording, in the history storage means, a payment history and user ID included in the payment history in association with each other, wherein
the prescribed image generation condition includes a payment history condition, and
the image generation means determines whether a payment history of the user who has succeeded in the face authentication satisfies the prescribed payment history condition.

### (Supplementary note A6)

The visit promotion apparatus according to any one of Supplementary notes A1 to A5, further comprising point storage means for storing point ID in the captured images and access information at the points in association with each other,
wherein the image generation means acquires access information associated with the point ID in the captured images from the point storage means and incorporates the access information to generate the composite image.

### (Supplementary Note A7)

The visit promotion apparatus according to Supplementary Note A6, wherein
the prescribed image generation condition includes successful face authentication at a prescribed point, and
the image generation unit acquires point ID in the captured image using which the face authentication is successful from the point management means, and determines whether the point ID is point ID at the prescribed point.

### (Supplementary Note B1)

A visit promotion system comprising:
a prescribed photographing device configured to take images including a user's face area;
a visit promotion apparatus configured to be able to communicate with the prescribed photographing device; and
an authentication apparatus configured to store the user's facial feature information and be able to communicate with the visit promotion apparatus, wherein the visit promotion apparatus includes:
   acquisition means for acquiring the captured images of the user who has been photographed by the prescribed photographing device;
   authentication control means for extracting the user's face area or facial feature information from the captured images and causing the authentication apparatus to perform face authentication;
   image generation means for, when a prescribed image generation condition based on the face authentication at a plurality of points is satisfied, generating a composite image including the captured images at the respective points of the user who has succeeded in the face authentication; and
   output means for transmitting the composite image generated by the image generation means to a prescribed display terminal.

### (Supplementary Note B2)

The visit promotion system according to Supplementary Note B 1, wherein the prescribed image generation condition is when the face authentication is successful at two or more of the plurality of points and there is a payment history of the user at at least one of the two or more points.

### (Supplementary Note C1)

A visit promotion method comprising the steps by a computer of:
acquiring captured images in which a user is photographed;
extracting the user's face area or facial feature information from the captured images and causing an authentication apparatus to perform face authentication;
when a prescribed image generation condition based on the face authentication at a plurality of points is satisfied, generating a composite image including the captured images at the respective points of the user who has succeeded in the face authentication; and
transmitting the generated composite image to a prescribed display terminal.

### (Supplementary Note D 1)

A non-transitory computer-readable medium storing a visit promotion program for causing a computer to execute the steps of:
acquiring captured images in which a user is photographed;
extracting the user's face area or facial feature information from the captured images and causing an authentication apparatus to perform face authentication;
when a prescribed image generation condition based on the face authentication at a plurality of points is satisfied, generating a composite image including the captured images at the respective points of the user who has succeeded in the face authentication; and
transmitting the generated composite image to a prescribed display terminal.

### (Supplementary Note E1)

A visit promotion apparatus comprising:
acquisition means for acquiring captured images in which a user is photographed;
extraction means for extracting a face area or facial feature information from the captured images;
face authentication means for performing face authentication based on the face area or the facial feature information;
image generation means for, when a prescribed image generation condition based on the face authentication at a plurality of points is satisfied, generating a composite image including the captured images at the respective points of the user who has succeeded in the face authentication; and
output means for transmitting the composite image generated by the image generation means to a prescribed display terminal.

### (Supplementary Note E2)

The visit promotion apparatus according to Supplementary Note E1, wherein the prescribed image generation condition is when the face authentication is successful at two or more of the plurality of points and there is a payment history of the user at at least one of the two or more points.

### (Supplementary Note F 1)

A visit promotion method comprising the steps by a computer of:
acquiring captured images in which a user is photographed;
extracting a face area or facial feature information from the captured images;
performing face authentication based on the face area or the facial feature information;
when a prescribed image generation condition based on the face authentication at a plurality of points is satisfied, generating a composite image including the captured images at the respective points of the user who has succeeded in the face authentication; and
transmitting the generated composite image to a prescribed display terminal.

### (Supplementary Note G1)

A non-transitory computer-readable medium storing a visit promotion program for causing a computer to execute the steps of:
acquiring captured images in which a user is photographed;
extracting a face area or facial feature information from the captured images;
performing face authentication based on the face area or the facial feature information;
when a prescribed image generation condition based on the face authentication at a plurality of points is satisfied, generating a composite image including the captured images at the respective points of the user who has succeeded in the face authentication; and
transmitting the generated composite image to a prescribed display terminal.

Although the invention of the present application has been described above with reference to the example embodiments (and examples), the invention of the present application is not limited to the above example embodiments (and examples). Various changes that can be understood by those skilled in the art within the scope of the invention of the present application can be made to the configurations and details of the invention of the present application.

### [Reference Signs List]

100, 100a, 800 VISIT PROMOTION APPARATUS
600, 900 VISIT PROMOTION SYSTEM
110a HISTORY DB
120a POINT DB
130 ACQUISITION UNIT
140 AUTHENTICATION CONTROL UNIT
140a FACIAL FEATURE EXTRACTION UNIT
150 AUTHENTICATION RECORDING UNIT
160 PAYMENT RECORDING UNIT
170 IMAGE GENERATION UNIT
180 OUTPUT UNIT
190 FACE AUTHENTICATION UNIT
191 FACIAL FEATURE DB
200 AUTHENTICATION APPARATUS
210 FACIAL FEATURE DB
220 FACE DETECTION UNIT
230 FEATURE POINT EXTRACTION UNIT
240 REGISTRATION UNIT
250 AUTHENTICATION UNIT
300 (300A0-300An) FACE AUTHENTICATION TERMINAL
310 CAMERA
320 STORAGE UNIT
330 COMMUNICATION UNIT
340 DISPLAY UNIT
350 CONTROL UNIT
352 PHOTOGRAPHING UNIT
353 REGISTRATION UNIT
354 AUTHENTICATION UNIT
355 PAYMENT UNIT
356 COMPOSITE IMAGE REQUEST UNIT
400 USER TERMINAL
410 CAMERA
420 STORAGE UNIT
430 COMMUNICATION UNIT
440 DISPLAY UNIT
450 CONTROL UNIT
452 PHOTOGRAPHING UNIT
453 REGISTRATION UNIT
454 AUTHENTICATION UNIT
455 PAYMENT UNIT
456 COMPOSITE IMAGE REQUEST UNIT
500 NETWORK

## Claims

1. A visit promotion apparatus comprising:
acquisition means for acquiring captured images in which a user is photographed;
authentication control means for extracting the user's face area or facial feature information from the captured images and causing an authentication apparatus to perform face authentication;
image generation means for, when a prescribed image generation condition based on the face authentication at a plurality of points is satisfied, generating a composite image including the captured images at the respective points of the user who has succeeded in the face authentication; and
output means for transmitting the composite image generated by the image generation means to a prescribed display terminal.

2. The visit promotion apparatus according to Claim 1, wherein the prescribed image generation condition includes a case where the face authentication is successful at two or more of the plurality of points and there is a payment history of the user at at least one of the two or more points.

3. The visit promotion apparatus according to Claim 1 or 2, wherein when the prescribed image generation condition is not satisfied at points where the face authentication is successful, the output means transmits information indicating a condition necessary for satisfying the image generation condition to the display terminal.

4. The visit promotion apparatus according to any one of Claims 1 to 3, further comprising authentication recording means for, when the face authentication is successful, recording, in history storage means, user ID of the user who has succeeded in the face authentication and the captured images in association with each other,
wherein the image generation means acquires the captured images associated with the user ID of the user who has succeeded in the face authentication from the history storage means and uses the captured images to generate a composite image.

5. The visit promotion apparatus according to Claim 4, further comprising payment recording means for recording, in the history storage means, a payment history and user ID included in the payment history in association with each other, wherein
the prescribed image generation condition includes a payment history condition, and
the image generation means determines whether a payment history of the user who has succeeded in the face authentication satisfies the prescribed payment history condition.

6. The visit promotion apparatus according to any one of Claims 1 to 5, further comprising point storage means for storing point ID in the captured images and access information at the points in association with each other,
wherein the image generation means acquires access information associated with the point ID in the captured images from the point storage means and incorporates the access information to generate the composite image.

7. The visit promotion apparatus according to Claim 6, wherein
the prescribed image generation condition includes successful face authentication at a prescribed point, and
the image generation means acquires the point ID in the captured images using which the face authentication is successful from the point storage means, and determines whether the point ID is point ID at the prescribed point.

8. A visit promotion system comprising:
a prescribed photographing device configured to take images including a user's face area;
a visit promotion apparatus configured to be able to communicate with the prescribed photographing device; and
an authentication apparatus configured to store the user's facial feature information and be able to communicate with the visit promotion apparatus, wherein the visit promotion apparatus includes:
acquisition means for acquiring the captured images of the user who has been photographed by the prescribed photographing device;
authentication control means for extracting the user's face area or facial feature information from the captured images and causing the authentication apparatus to perform face authentication;
image generation means for, when a prescribed image generation condition based on the face authentication at a plurality of points is satisfied, generating a composite image including the captured images at the respective points of the user who has succeeded in the face authentication; and
output means for transmitting the composite image generated by the image generation means to a prescribed display terminal.

9. The visit promotion system according to Claim 8, wherein the prescribed image generation condition is when the face authentication is successful at two or more of the plurality of points and there is a payment history of the user at at least one of the two or more points.

10. A visit promotion method comprising the steps by a computer of:
acquiring captured images in which a user is photographed;
extracting the user's face area or facial feature information from the captured images and causing an authentication apparatus to perform face authentication;
when a prescribed image generation condition based on the face authentication at a plurality of points is satisfied, generating a composite image including the captured images at the respective points of the user who has succeeded in the face authentication; and
transmitting the generated composite image to a prescribed display terminal.

11. A non-transitory computer-readable medium storing a visit promotion program for causing a computer to execute the steps of:
acquiring captured images in which a user is photographed;
extracting the user's face area or facial feature information from the captured images and causing an authentication apparatus to perform face authentication;
when a prescribed image generation condition based on the face authentication at a plurality of points is satisfied, generating a composite image including the captured images at the respective points of the user who has succeeded in the face authentication; and
transmitting the generated composite image to a prescribed display terminal.

12. A visit promotion apparatus comprising:
acquisition means for acquiring captured images in which a user is photographed;
extraction means for extracting a face area or facial feature information from the captured images;
face authentication means for performing face authentication based on the face area or the facial feature information;
image generation means for, when a prescribed image generation condition based on the face authentication at a plurality of points is satisfied, generating a composite image including the captured images at the respective points of the user who has succeeded in the face authentication; and
output means for transmitting the composite image generated by the image generation means to a prescribed display terminal.

13. The visit promotion apparatus according to Claim 12, wherein the prescribed image generation condition is when the face authentication is successful at two or more of the plurality of points and there is a payment history of the user at at least one of the two or more points.

14. A visit promotion method comprising the steps by a computer of:
acquiring captured images in which a user is photographed;
extracting a face area or facial feature information from the captured images;
performing face authentication based on the face area or the facial feature information;
when a prescribed image generation condition based on the face authentication at a plurality of points is satisfied, generating a composite image including the captured images at the respective points of the user who has succeeded in the face authentication; and
transmitting the generated composite image to a prescribed display terminal.

15. A non-transitory computer-readable medium storing a visit promotion program for causing a computer to execute the steps of:
acquiring captured images in which a user is photographed;
extracting a face area or facial feature information from the captured images;
performing face authentication based on the face area or the facial feature information;
when a prescribed image generation condition based on the face authentication at a plurality of points is satisfied, generating a composite image including the captured images at the respective points of the user who has succeeded in the face authentication; and
transmitting the generated composite image to a prescribed display terminal.
